# EUROPEAN PATENT APPLICATION

(11) **EP 4 567 318 A1**
(43) Date of publication of application: **11.06.2025**
(21) Application number: 24216758.3
(22) Date of filing: 02.12.2024
(51) Int. Cl.: F16P 3/08

(54) **IMPROVED SAFETY LOCKING APPARATUS**

(30) Priority: 04.12.2023 IT 202300025836
(71) Applicant: Pizzato Elettrica S.r.l., 36063 Marostica (Vicenza) (IT)
(72) Inventor: PIZZATO, Marco, 36063 MAROSTICA (VI) (IT); ZONTA, Simone, 36063 MAROSTICA (VI) (IT)
(74) Representative: Studio Torta S.p.A.

(57) **Abstract**

A safety locking apparatus (1) for a safety door (103) comprising a safety switch (3) and an actuator (5); the safety switch (3) extends along a reference axis (8) and comprises:
- a seat (9) adapted to be engaged by the actuator (5) and shaped to allow the insertion of the actuator (5) in one or more insertion directions (d₁, d₂, d₃), which lie on a reference plane (P); and
- locking means (10), configured to lock the actuator (5) in the seat (9) or to allow the actuator (5) to be withdrawn from the seat (9) and comprising a locking pin (24) movable orthogonally to the reference plane (P) from and towards an extracted position, in which it is configured to lock the actuator (5) in the seat (9).

## Description

### CROSS-REFERENCE TO RELATED APPLICATIONS

This patent application claims priority from Italian patent application no. 102023000025836 filed on December 4, 2023, the entire disclosure of which is incorporated herein by reference.

### TECHNICAL FIELD

The present invention relates to a safety locking apparatus for locking safety doors and/or mobile shields for industrial machinery and plants.

Use to which the present invention will explicitly refer without however loss in generality.

### STATE OF THE ART

As is known, industrial machines and plants that present a hazardous condition during their operation are generally provided with protective barriers and safety doors to prevent unauthorized access.

For example, such a hazardous condition occurs when operating organs of the industrial machine are in motion, under pressure and/or at a high temperature.

The aforementioned industrial machines are provided with electronically controlled safety locking apparatuses associated with the safety doors and adapted to lock the safety doors when the hazardous condition is present.

In particular, the start-up of the machine is only allowed under safe conditions, i.e. when the safety doors are closed and locked by the respective safety locking apparatuses. Conversely, the unlocking of the safety locking apparatuses and the opening of safety doors are only allowed when the hazardous condition has ceased.

The aforementioned safety locking apparatuses usually comprise: an electronically operated safety switch anchored to a fixed part of the safety door; and an actuator anchored to a movable part of the safety door and adapted to cooperate with the safety switch when the movable part of the safety door is closed, in order to enable the locking of the same.

The safety switch normally comprises: a housing anchored to the fixed part of the safety door; a seat realized on the housing and shaped so that it can be engaged by the actuator when the safety door is closed; and an electronically controlled latch housed within the housing and adapted to selectively lock the actuator in the seat.

In most safety locking apparatuses currently on the market, the housing has an oblong parallelepiped shape and is intended to be fixed to a jamb of the safety door.

In addition, in such safety locking apparatuses, the seat is located on a front wall and/or on a side wall of the housing, and is shaped to allow the actuator to be inserted frontally or laterally, i.e. respectively along an insertion direction horizontal and perpendicular or horizontal and parallel to the vertical plane of extension of the safety door.

Clearly, the aforementioned safety locking apparatuses are suitable for use only with hinged safety doors or with horizontally slidable safety doors, but are not suitable for use with up-and-over safety doors, vertically slidable safety doors, and/or security roller blinds or shutters, in which the direction of insertion of the actuator is substantially vertical.

In some cases, the aforementioned safety locking apparatuses are used with up-and-over safety doors or vertically slidable safety doors by arranging the safety switch in a horizontal position. The horizontal arrangement of the safety switch, however, considerably increases its plan dimensions and is not suitable for safety doors/barriers provided with smaller accesses.

The object of the present invention is thus to provide a safety locking apparatus that is capable of increasing flexibility of use and installation possibilities and that is simultaneously compact and simple and inexpensive to manufacture.

### SUMMARY OF THE INVENTION

In accordance with the aforementioned objectives, a safety locking apparatus as defined in claim 1 and preferably, but not necessarily, in any one of the claims dependent thereon is provided according to the present invention.

The claims describe preferred embodiments of the present invention and form an integral part of the present description.

### BRIEF DESCRIPTION OF THE DRAWINGS

In the following, a few embodiments of the invention will be described for a better understanding of the same in the form of non-limiting examples and with reference to the accompanying drawings, wherein:
- Figure 1 is a perspective view of an industrial machine or plant equipped with a safety locking apparatus provided according to the present invention, with parts removed for clarity;
- Figures 2 and 3 are two perspective views of a safety locking apparatus provided according to the present invention, with parts removed for clarity, and in two different configurations;
- Figures 4 and 5 are two front views of the safety locking apparatus illustrated respectively in Figures 2 and 3, with parts removed for clarity; and
- Figure 6 is a side view of the safety locking apparatus illustrated in Figures 2 and 3, with parts removed for clarity;
- Figures 7 to 10 are schematic side views, sectioned along the section plane I-I, of the safety locking apparatus illustrated in Figure 4 in as many steps of its operation; and
- Figures 11 and 12 are schematic views from above, sectioned along the section plane II-II, of the safety locking apparatus illustrated in Figure 5 in as many stages of its operation.

### EMBODIMENTS OF THE INVENTION

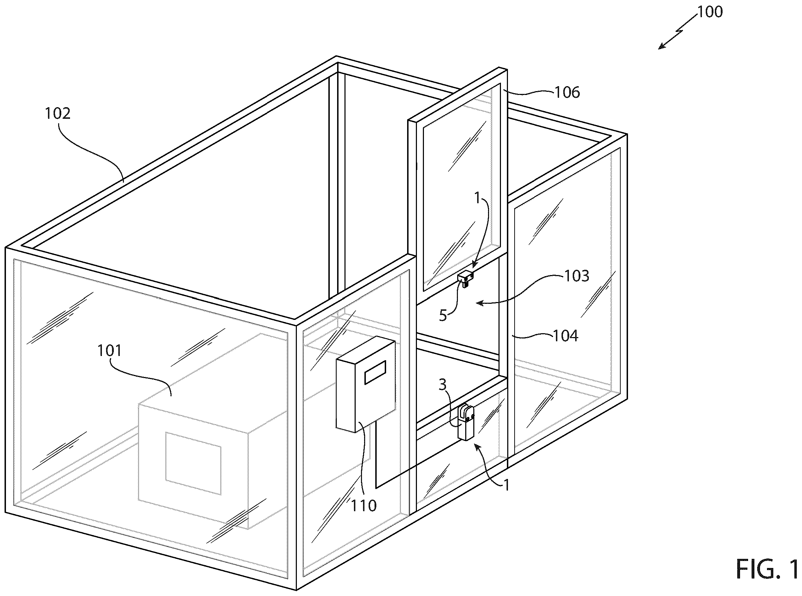

With reference to the example illustrated in Figure 1, the reference number 100 indicates, as a whole, an industrial machinery or an industrial plant, comprising a machine 101 and a protective perimeter or barrier 102 adapted to prevent unauthorized access to the machine 101.

The protective barrier 102, in particular, surrounds the machine 101 and is equipped with an access or safety door 103 adapted to allow safe access to the machine 101.

More in detail, the safety door 103 preferably comprises a fixed part 104 or frame shaped to delimit an access opening that allows passing through the protective barrier 102 and accessing the machine 101.

In addition, the safety door 103 comprises a movable part 106 or leaf/panel supported in a movable manner by the fixed part 104 between an open position (illustrated in Figure 1), in which it allows passing through the access opening of the safety door 103, and a closed position (not illustrated), in which it obstructs the access opening and prevents access to the machine 101.

According to an exemplary embodiment, the safety door 103 can comprise an overhead door and/or a security roller blind or shutter, in which the movable part 106 is movable between the open position and the closed position in a vertical direction.

Alternatively, the safety door 103 can comprise a sliding safety door, in which the movable part 106 is movable between the open position and the closed position along a horizontal direction.

In addition, the plant 100 is further equipped with an electronically operated safety locking apparatus 1 which is adapted to be associated with the safety door 103 and is configured to selectively lock the safety door 103 in the closed position.

With reference to the illustrated example, in particular, the apparatus 1 comprises a safety switch 3 configured to be fixed to the fixed part 104 of the safety door 103.

In addition, the apparatus 1 comprises an actuator 5 configured to be fixed to the movable part 106 of the safety door 103 and is adapted to cooperate with the safety switch 3 when the movable part 106 is arranged in the closed position.

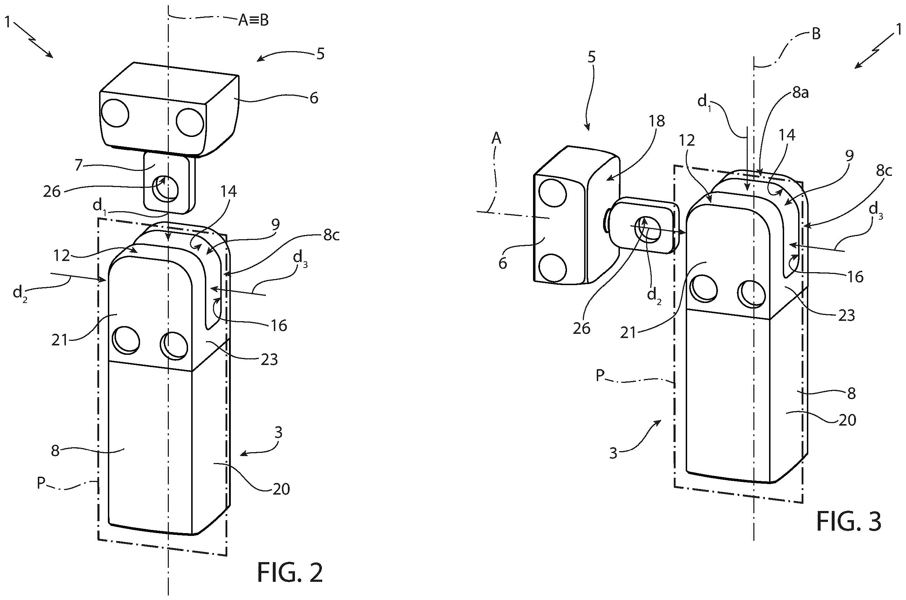

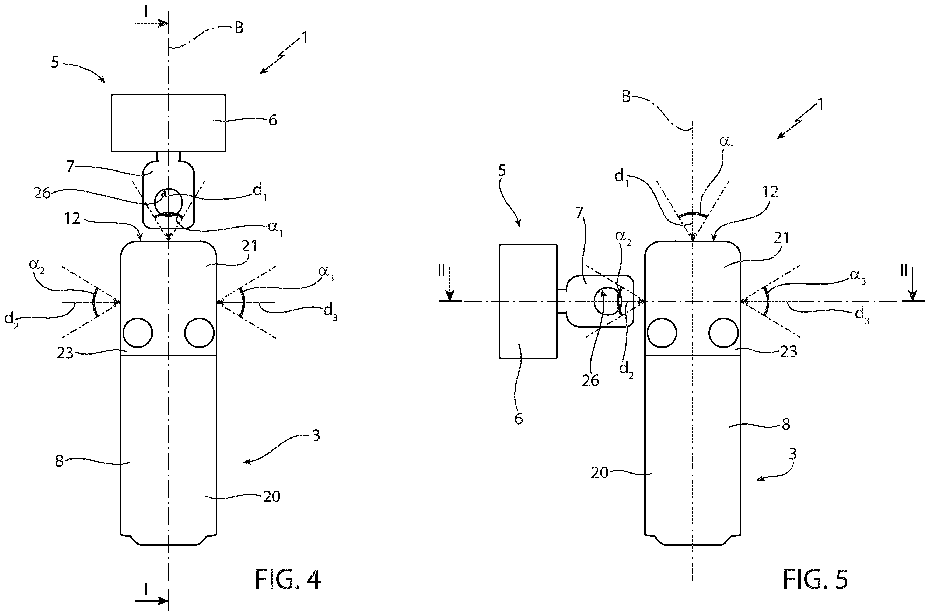

With reference to the example illustrated in Figures 2 to 12, the actuator 5 preferably comprises a supporting body 6 configured to be fixed to the movable part 106. Preferably, the supporting body 6 of the actuator 5 has an advantageously substantially parallelepiped shape.

In addition, the actuator 5 preferably comprises a locking element 7 of a preferably oblong shape, which extends cantilevered from the supporting body 6, along a reference axis A, and is configured to cooperate with the safety switch 3 when the movable part 106 is arranged in the closed position.

With reference to the example illustrated in Figures 2 to 10, the safety switch 3 extends along a reference axis B and comprises a main body 8 configured to be anchored to the fixed part 104.

In use, the main body 8 can be positioned on the fixed part 104 so that its reference axis B is substantially vertical.

Alternatively, in use, the main body 8 can be positioned on the fixed part 104 so that its reference axis B is substantially horizontal.

In addition, the main body 8 preferably has an oblong and advantageously substantially parallelepiped shape.

With reference to the example illustrated in Figures 2 to 8, in addition, the safety switch 3 comprises a seat 9 configured to be engaged by the actuator 5 when the movable part 106 is arranged in the closed position.

Preferably, the seat 9 is a cavity obtained on the main body 8 and dimensioned to house the locking element 7 within it.

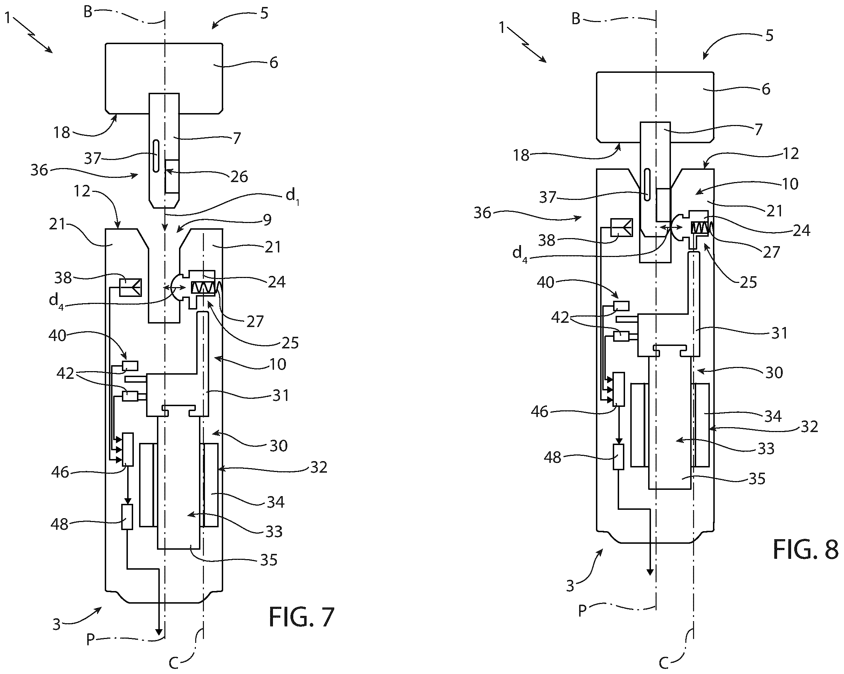

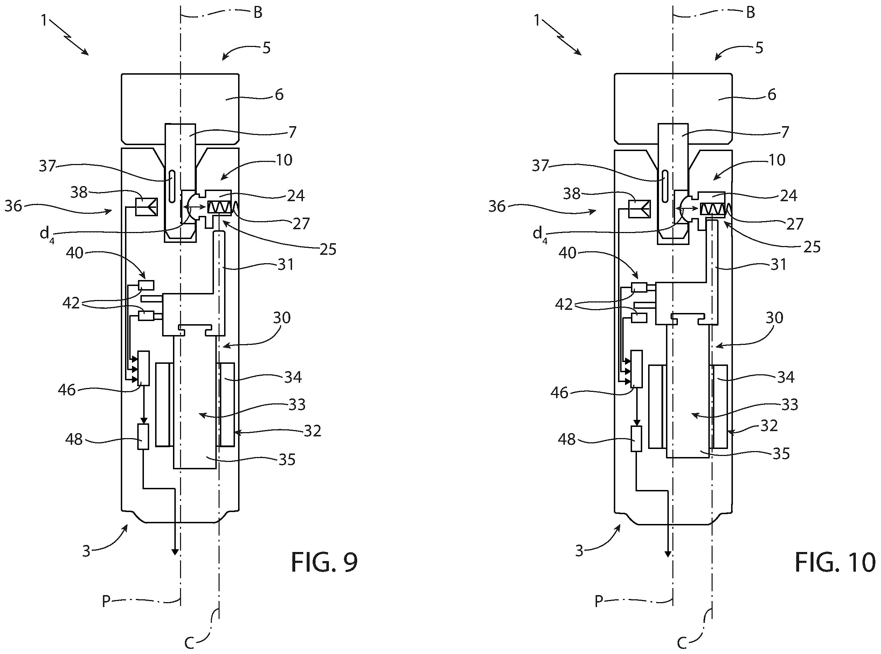

In addition, the safety switch 3 comprises locking means 10 configured to assume, selectively and alternatively, a locking configuration (illustrated in Figure 10) wherein the locking means 10 locks the actuator 5 within the seat 9, and a release configuration (illustrated in Figures 7, 8 and 9), wherein the locking means 10 allows the actuator 5 to be withdrawn (disengaged) from the seat 9.

In the locking configuration, the locking means 10 is configured to block the locking element 7 in the seat 9 and thus prevent the opening of the safety door 103.

In the release configuration, on the other hand, the locking means 10 is configured to allow the extraction of the locking element 7 from the seat 9 and the resulting opening of the safety door 103.

With reference to the example illustrated in Figures 2 to 8, in particular, the seat 9 is preferably located at an axial end 12 of the main body 8.

In use, the seat 9 is preferably, but not necessarily, oriented upwards. In addition, the seat 9 is preferably positioned so as to straddle the vertical midplane of the main body 8.

In other words, the seat 9 is accessible from at least one direction perpendicular to a plane with respect to which the cross section of the safety switch 3 has the smallest plan dimensions.

With reference to the example illustrated in Figures 2 to 10, in addition, the seat 9 is shaped to allow the insertion of the actuator 5, in particular of the locking element 7, in one or more insertion directions lying on a reference plane P parallel to the reference axis B of the main body 8.

In particular, the reference plane P preferably coincides with the vertical centerline plane of the main body 8.

Preferably, all insertion directions lie on the reference plane P.

Preferably, the insertion direction corresponds with the trajectory traveled by the locking element 7 during its insertion into the seat 9.

With reference to the example illustrated in Figures 2, 4, and 6-10, the seat 9 is preferably shaped to allow the insertion of the actuator 5 at least in a first insertion direction d₁ parallel to the reference axis B.

In addition, with reference in particular to Figures 3, 5, 11, and 12, the seat 9 is preferably shaped to allow the insertion of the actuator 5 also in a second insertion direction d₂ transversal, in particular orthogonal, to the reference axis B and/or the insertion direction d₁.

In addition, the seat 9 is preferably shaped to allow the insertion of the actuator 5 also in a third insertion direction d₃ parallel and opposite to the insertion direction d₂. Preferably, the third insertion direction d₃ is also aligned with the second insertion direction d₂.

Moreover, with reference to the example illustrated in Figures 2 to 5, the seat 9 is preferably shaped to allow the insertion of the actuator 5 also in insertion directions that are inclined with respect to the first insertion direction d₁, the second insertion direction d₂ and/or the third insertion direction d₃.

More in detail, the seat 9 is preferably shaped to allow the insertion of the actuator 5 in a plurality of insertion directions defining respectively a first angular interval α₁ with respect to the first insertion direction d₁, a second angular interval α₂ with respect to the second insertion direction d₂ and/or a third angular interval α₃ with respect to the third insertion direction d₃.

In other words, the seat 9 is shaped to allow the actuator 5 an angular play in the reference plane P during its insertion with respect to the insertion directions d₁, d₂ and/or d₃.

With reference to the example illustrated in Figures 2 and 3, in particular, the seat 9 is preferably provided with a first entrance opening 14, which is provided on the upper face of the main body 8 and has a width, parallel to the reference plane P, which approximates by excess the width of the locking element 7, in order to allow the insertion of the latter also in directions that are inclined with respect to the first direction of insertion d₁, i.e., with an angular clearance.

More in detail, the first opening 14 is preferably shaped to allow the insertion of the locking element 7 in a plurality of insertion directions belonging to the first angular interval α₁.

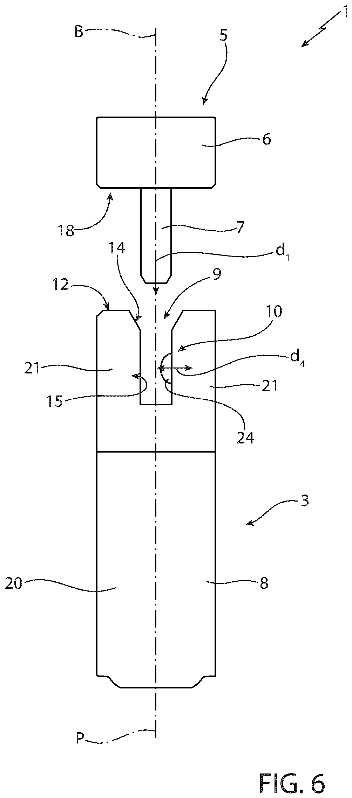

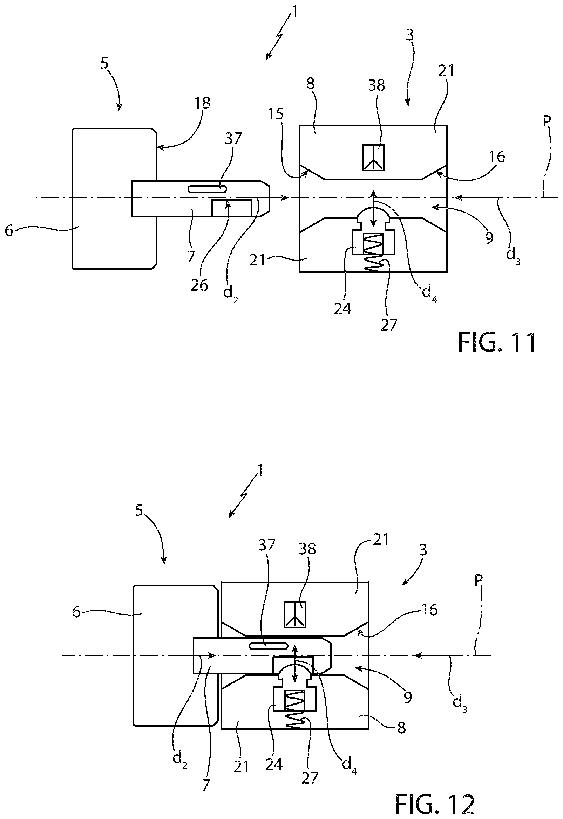

In addition, the seat 9 is preferably also provided with a second entrance opening 15 (visible in Figures 6 and 11) and/or a third entrance opening 16, which are respectively provided on opposite lateral faces of the main body 8 and have a height, parallel to the reference axis B, which approximates by excess the width of the locking element 7, in order to allow the insertion of said locking element 7 also in directions that are respectively inclined with respect to the second d₂ and/or the third insertion direction d₃.

More in detail, the second opening 15 and/or the third opening 16 are preferably shaped to allow the insertion of the locking element 7 in a plurality of insertion directions respectively belonging to the second α₂ and/or the third α₃ angular interval.

In particular, the second opening 15 is preferably provided on a first lateral face of the main body 8 transversal, in particular orthogonal, to the reference plane P. The third opening 16, on the other hand, is preferably provided on a second lateral face of the main body 8 transversal, in particular orthogonal, to the reference plane P and opposite the first lateral face.

In some embodiments, with reference to Figures 2 and 3, the seat 9 is shaped to allow the insertion of the actuator 5 in a plurality of insertion directions defining an angular interval that extends seamlessly between the first insertion direction d₁ and the second insertion direction d₂, and advantageously comprises the first angular interval α₁ and the second angular interval α₂.

More in detail, the first opening 14 and the second opening 15 are preferably seamlessly joined to each other.

In particular, the seat 9 is preferably provided with an entrance opening shaped to allow the insertion of the actuator 5 in a plurality of insertion directions defining an angular interval of an amplitude greater than or equal to 90°.

In preferred embodiments, the seat 9 is preferably shaped to allow the insertion of the actuator 5 in a plurality of insertion directions defining an angular interval that extends seamlessly between the second insertion direction d₂ and the third insertion direction d₃, and advantageously comprises the first α₁, the second α₂ and the third angular interval α₃.

In other words, the seat 9 is preferably shaped to allow the insertion of the actuator 5 in a plurality of insertion directions defining an angular range of an amplitude greater than or equal to 180°.

More in detail, the first opening 14, the second opening 15 and the third opening 16 are preferably seamlessly joined to one another.

In particular, the seat 9 is preferably provided with a single entrance opening shaped to allow the insertion of the actuator 5 in a plurality of insertion directions defining an angular range of an amplitude greater than or equal to 180°.

With reference to the example illustrated in Figures 2 to 5, in addition, the seat 9 is preferably shaped so as to align the actuator 5 or keep the actuator 5 aligned in one or more discrete directions when the latter is inserted and/or locked within said seat 9.

More in detail, the seat 9 is preferably shaped so as to align the actuator 5 with the first insertion direction d₁, the second insertion direction d₂ and/or the third insertion direction d₃ when the latter is inserted and/or locked within said seat 9.

In particular, the upper face of the main body 8 is preferably provided with a flat portion 8a orthogonal to the insertion direction d₁ and the reference axis B, and is arranged adjacent to the first opening 14.

Analogously, the two lateral faces of the main body 8 are in turn preferably provided with flat portions 8b and 8c, which are respectively orthogonal to the insertion direction d₂ and the insertion direction d₃ and are arranged adjacent to the second opening 15 and to the third opening 16.

The supporting body 6 of the actuator 5, on the other hand, preferably comprises an axial face 18 which is adapted to be arranged in abutment against the main body 8 when the locking element 7 is inserted and/or locked in the seat 9.

Preferably, the axial face 18 comprises a flat portion orthogonal to the reference axis A, which in use is adapted to be arranged against the opposite flat portion 8a of the upper face and/or the flat portion 8b, 8c of one of the lateral faces of the main body 8, in order to respectively allow the alignment of the actuator 5 with the insertion directions d₁, d₂, and/or d₃ when the actuator 5 is inserted and/or locked in the seat 9.

Advantageously, the actuator 5 can be inserted into the seat 9 according to a plurality of insertion directions belonging to a continuous angular interval of insertion directions while, when it is locked, it is kept aligned in one or more locking directions, each of which belongs to a respective locking angular interval that is not consecutive with the other locking angular intervals.

With reference to the example illustrated in Figures 6 to 12, the main body 8 preferably comprises a housing 20, or casing, and a pair of protruding walls 21, which extend cantilevered from the housing 20 parallel to the reference axis B and are arranged facing each other in a spaced-apart manner on opposite sides of the reference plane P. In addition, the two protruding walls 21 are preferably parallel to the reference plane P. Preferably, the two protruding walls 21 delimit the seat 9.

In one embodiment, the protruding walls 21 are realized as a single body with the housing 20. In other words, the main body 8 can have a monolithic structure.

In other possible embodiments, the main body 8 has a modular structure and also comprises a head 23 which is fixed to one end of the housing 20 and which is provided with the protruding walls 21 that define the seat 9.

With reference to the example illustrated in Figures 6 to 10, the locking means 10, on the other hand, comprises a locking pin 24 or bolt configured to lock the actuator 5, in particular the locking element 7, in the seat 9 when the locking means 10 is in the locking configuration.

More in detail, the locking pin 24 is movable along a locking direction d₄ transversal, in particular orthogonal, to the reference plane P from and towards an extracted position in which the locking pin 24 is configured to lock the actuator 5 in the seat 9.

With reference to the example illustrated in Figures 7 to 10, the locking pin 24 is preferably movable between the extracted position (Figures 7, 9 and 10) and a retracted position (Figure 8).

More in detail, in the extracted position, the locking pin 24 preferably extends cantilevered into the seat 9.

In the retracted position, on the other hand, the locking pin 24 is preferably housed within the main body 8 and does not extend cantilevered into the seat 9.

More in detail, the locking pin 24 is supported by the main body 8 in order to translate in the locking direction d₄ between the extracted position and the retracted position, thus preferably remaining substantially parallel to itself. In more detail, the locking pin 24 is preferably housed in a sliding manner within a cavity of a complementary shape provided on a protruding wall 21.

The locking element 7, on the other hand, preferably comprises a concave seat 26 or recess or groove adapted to be engaged by the locking pin 24 when the latter is in the extracted position.

With reference to the example illustrated in Figures 7 to 10, in addition, the locking means 10 preferably comprises elastic means 27, for instance a spring, interposed between the locking pin 24 and the main body 8 and configured to exert forces adapted to keep the locking pin 24 in the extracted position.

In addition, the locking means 10 preferably comprises an electrically operated locking mechanism 30 configured to selectively lock the locking pin 24 in the extracted position.

More in detail, the locking mechanism 30 is preferably configured to assume, selectively and alternatively, a first configuration in which it is mechanically uncoupled from the locking pin 24, thus allowing the latter to translate from and towards the extracted position, and a second configuration in which it cooperates in contact with the locking pin 24, thus locking the latter in the extracted position.

When the locking mechanism is in the first configuration, the locking pin 24 is advantageously free to move between the extracted position and the retracted position.

Preferably, the first configuration of the locking mechanism 30 determines the release configuration of the locking means 10. The second configuration of the locking mechanism 30, on the other hand, determines the locking configuration of the locking means 10.

With reference to the example illustrated in Figures 7 to 10, in the second configuration, the locking mechanism 30 is adapted to be arranged against the locking pin 24 in order to lock it mechanically in the extracted position.

According to the illustrated example, the locking pin 24 can be provided with a recess or groove 25 adapted to be engaged by the locking mechanism 30 when the latter is in the second configuration, in order to lock said locking pin 24 in the extracted position.

With reference to the example illustrated in Figures 7 to 10, the locking mechanism 30 preferably comprises a slider 31 housed in a slidable manner within the main body 8 and movable along a sliding axis C between a first position (Figures 7, 8 and 9) and a second position (Figure 10). The sliding axis C is transversal to the locking direction d₄. Preferably, the sliding axis C is perpendicular to the locking direction d₄. Even more preferably, the sliding axis C is parallel to the reference axis B.

In the first position, the slider 31 is preferably mechanically uncoupled from the locking pin 24, thus allowing the latter to translate from and towards the extracted position.

In the second position, on the other hand, the slider 31 preferably cooperates in contact with the locking pin 24, thus locking the latter in the extracted position.

Preferably, in the second position, the slider 31 is configured to be arranged against the locking pin 24, thus locking the latter in the extracted position.

For example, in the second position, the slider 31 is adapted to engage the groove 25 of the locking pin 24.

With reference to the example illustrated in Figures 7 to 10, the locking mechanism 30 is preferably also provided with an actuator 32 configured to move the slider 31 along the reference axis B between the first and second positions.

Preferably, the actuator 32 comprises an electromagnet 33, for instance a bistable or monostable electromagnet, mechanically coupled to the slider 31 and configured to move the latter along the reference axis C between the first position and the second position.

Alternatively, the actuator 32 may comprise an electric motor or other motion actuator of any shape or type configured to move the slider 31.

In particular, the electromagnet 33 preferably comprises a solenoid 34 and a ferromagnetic core 35 housed in a slidable manner within the solenoid 33 and is mechanically coupled to the slider 31.

Advantageously, the safety locking apparatus 1 can also comprise one or more auxiliary release devices provided according to ISO 14119:2013 in order to allow the unlocking of the actuator 5 in particular conditions.

With reference to the example illustrated in Figures 7 to 10, in addition, the safety locking apparatus 1 preferably also comprises identification means 36, configured to determine when the actuator 5 is inserted in the seat 9.

In addition, the identification means 36 is configured to output an electrical presence signal indicative of the fact that the actuator 5 has been inserted into the seat 9 of the safety switch 5.

More in detail, the identification means 36 preferably comprises a transmitter 37 carried by the actuator 5. For instance, but not necessarily, the transmitter 37 is positioned on the locking element 7.

In addition, the electronic identification means 36 preferably comprises at least one receiver 38 carried by the main body 8, adapted to cooperate with the transmitter 37 and configured to output said presence signal.

Preferably, the transmitter 37 preferably comprises an RFID (radio frequency identification) tag while the receiver 38 comprises an RFID antenna.

The receiver 38 is preferably positioned at the seat 9, so that the transmitter 37 can be arranged near the receiver 38 when the actuator 5 is inserted into the seat 9.

In particular, the receiver 38 preferably faces the inside of the seat 9 and points towards the locking pin 24.

In addition, the receiver 38 is preferably housed in the wall 21 opposite the wall 21 in which the locking pin 24 is positioned.

Optionally, the positioning of the locking pin 24 with respect to the seat 9 and of the recess 26 with respect to the contour of the locking element 7 is such that the absolute distance between the transmitter 37 and the receiver 38 is kept constantly unvaried when the insertion direction of the actuator 5 varies, when the actuator 5 is locked in the seat 9.

Advantageously, this makes it possible to shape the seat 9 so as to ensure a plurality of insertion directions of the actuator 5 that are inclined with respect to one another and, at the same time, to employ a single transmitter 37 and a single receiver 38.

In preferred embodiments, the receiver 38 is configured to generate a signal to excite the transmitter 37 when the latter is near the receiver 38. The transmitter 37 is configured to transmit an identification signal to the receiver 38 when it is excited by the signal generated by the receiver 38. An identification code univocally associated with the actuator 5 is preferably encoded in said identification signal. In these cases, the presence signal generated by the identification means 36 also comprises said identification code of the actuator 5.

With reference to the example illustrated in Figures 7 to 10, in addition, the safety locking apparatus 1 preferably comprises sensor means 40 configured to determine whether the locking mechanism 30 is in the first configuration or in the second configuration.

In addition, sensor means 40 are preferably configured to output an electrical locking signal indicative of the fact that the locking mechanism 30 has been arranged in its second configuration.

More in detail, sensor means 40 preferably comprise one or more position sensors 42 which are configured to measure the position and/or the movement of the slider 31.

In particular, the position sensors 42 are preferably configured to determine when the slider 31 is in the first or second position.

Preferably, sensor means 40 are arranged in the housing 20.

With reference to the example illustrated in Figures 7 to 10, in addition, the safety locking apparatus 1 is preferably provided also with an electronic control unit 46 operationally connected at least to the identification means 36 and the sensor means 40, in order to receive the presence signal and the locking signal output by the latter.

The electronic control unit 46 is preferably connected to the locking means 10 and is configured to control the latter based on the presence signal provided by the identification means 36.

More in detail, the electronic control unit 46, after receiving the presence signal, is preferably configured to control the locking means 10 in order to arrange the latter in the locking configuration, so as to actuate the locking means 10 once the safety door 103 has been closed and the actuator 5 has engaged the seat 9.

Preferably, the electronic control unit 46 is further provided with processing means configured to evaluate said presence signal and determine whether the seat 9 has been engaged by the correct actuator 5 by comparing said identification code comprised in the presence signal with one or more expected identification codes stored in said electronic control unit 46.

Moreover, the processing means are configured to determine when the locking means 10 is in the release configuration or in the locking configuration based on the locking signal provided by the sensor means 40.

Preferably, the electronic control unit 46 is arranged in the housing 20 and the processing means comprise at least one CPU, preferably a couple of CPUs (central processing units), which communicate with each other in a redundant manner.

In addition, the apparatus 1 preferably comprises switching means 48 configured to be electronically connected to an electronic control unit 110 of the machine 101.

More in detail, the switching means 48 is configured to be able to assume an active state and an inactive state distinguishable from each other.

The electronic control unit 46 is configured to control the switching means 48 according to the interaction between the actuator 5 and the seat 9.

For instance, the interaction between the actuator and the seat 9 can be of a first type in which the actuator 5 is not inserted into the seat 9, a second type in which the actuator 5 is inserted into the seat 9 and the locking means 10 is in the release configuration, or a third type in which the actuator 5 is inserted into the seat 9 and the locking means 10 is in the locking configuration.

Preferably, the switching means 48 comprises a couple of electronic safety outputs of the OSSD type (Output Signal Switching Device).

Purely by way of example, a safe output in the active state transmits a signal and assumes a logical state equal to "1" or "ON" while in the inactive state it does not transmit any signal and assumes a logical state equal to "0" or "OFF."

Even more preferably, the switching means 48 comprises at least two independent OSSD-type safe outputs, each of which is controlled by a respective CPU of the electronic control unit 46.

The electronic control unit 46, in turn, is preferably electronically connected to the switching means 48.

The electronic control unit 46, in particular, can be configured to bring or keep the switching means 48 in the active state when it receives at least the presence signal from the identification means 36. Preferably, the electronic control unit 46 is configured to bring the switching means 48 into or keep the switching means 48 in the active state when it receives at least the presence signal from the identification means 36 and the locking signal from the sensor means 40, i.e. when the movable part 106 of the safety door is arranged in the closed position and is locked by the apparatus 1.

Conversely, the electronic control unit 46 is configured to bring the switching means 48 into or keep the switching means 48 in the inactive state when it does not receive the presence signal, i.e. when the movable part 106 is in the open position.

Alternatively, or in addition, the switching means 48 can be controlled by the electronic control unit 46 in order to generate digital signals, i.e. bit sequences, encoding a telegram according to a communication protocol. The communication protocol can be of a known type such as, for example, IO-Link, Profinet, EtherCAT, EtherNet/IP, IO-Link Safety, Profisafe, CIP Safety, Safety over EtherCAT (FSoE), etc. or any other assimilable communication protocol. In this case, some bits of the telegram encode information pertaining to the inserted and/or inserted-and-locked status of the actuator 5 with respect to the seat 9. Preferably, the telegram also comprises validation bits (CRC, watchdog, consecutive numbers relative to previously transmitted telegrams) configured to ensure the integrity of said telegram and generated according to the other bits of the telegram and/or according to previously transmitted telegrams.

The switching means 48 is configured to enable the operation of the machine 101 when in the active state, and vice versa to prevent the operation of the machine 101 when in the passive state.

Preferably, the switching means 48 is arranged in the housing 20.

The operation of the apparatus 1 and related plant 100 according to the invention and described in the foregoing is as follows.

With reference to Figures 7 and 11, when the safety door 103 is in the open position, the actuator 5 is spaced apart from the safety switch 3. In this operating condition, the locking means 10 is in the release configuration and the electronic control unit 46 brings the switching means 48 into or keeps the switching means 48 in the inactive state, so as to prevent the operation of the machine 101.

With reference to Figures 8 and 9, during the final stage of the movement of the movable part 106 from the open position to the closed position, the actuator 5 is inserted into the seat 9. In particular, during the insertion, the locking element 7 is set against the locking pin 24 and exerts a thrust against the latter, thus causing it to move into the retracted position along the locking direction d₄, against the elastic action of the elastic means 27, and completes its axial movement, thus completing the insertion into the seat 9, when the groove 26 reaches the locking pin 24. In particular, when this position is reached, the locking pin 24 moves axially under the thrust of the elastic means 27 from the retracted position to the extracted position so as to engage the groove 26.

In this operating condition, the locking means 10 is still in the release configuration and the electronic control unit 46 keeps the switching means 48 in the inactive state in order to prevent the operation of the machine 100.

Finally, with reference to Figure 10, during the locking phase of the safety door 103, the electronic control unit 46 is configured to bring the locking means 10 into the locking configuration, in order to securely lock the locking pin 24 in the extracted position and to prevent the actuator 5 from being extracted by the safety switch 3, in order to keep the safety door 103 closed.

In this operating condition, the safety door 103 is closed and locked. The electronic control unit 46 brings the switching means 48 into the active state in order to enable the operation of the machine 100.

The advantages associated with the safety locking apparatus 1 are evident.

First of all, the particular design of the seat 9 allows the actuator 5 to be inserted into the switch 3 both vertically, from above, as well as laterally. As a result, the apparatus 1 is particularly suitable for use both with security roller blinds or shutters and up-and-over safety doors, wherein the direction of movement of the movable part is substantially vertical, as well as with horizontally sliding doors, wherein the direction of movement of the movable part is horizontal.

Moreover, the apparatus 1 always ensures an insertion direction of the actuator 5 into the seat 9 that is perpendicular to a plane in which the projection of the switch 3 has the smallest plan dimensions. This allows the safety locking device 1 to also be mounted in machines having smaller doors or accesses.

In addition, the particular design of the seat 9 allows the actuator 5 to be inserted into the switch 3 laterally, with a horizontal insertion direction, but while keeping the actuator 5 in a vertical position. As a result, the apparatus 1 is also particularly suitable for use with double laterally slidable safety doors.

Moreover, the apparatus 1 can also be used with hinged safety doors by simply positioning the safety switch 3 next to them on the fixed part 104 of the safety door 103 so that either the second insertion direction d₂ or the third insertion direction d₃ is orthogonal to the vertical plane of extension of said safety door 103.

The particular design of the locking pin 24 and locking mechanism 30, in addition, increases the strength and safety of the apparatus 1. In fact, when in its second configuration, the locking mechanism 30 is sandwiched between the locking pin 24 and the main body 8 and mechanically blocks any possible movement of said locking pin 24.

Finally, the locking pin 24 has a function of restraining the movable part 106 of the safety door 103 also when the locking means 10 is in the release configuration. In this condition, in fact, the elastic means 27 keeps the locking pin 24 in the extracted position, in order to block the actuator 5 in the seat 9 and prevent an accidental opening of the movable part 106, for example caused by gusts of wind and/or vibrations caused by the machine 101.

Finally, it is clear that modifications and variants can be made to the safety locking apparatus 1 according to the present invention without thereby departing from the scope of protection defined by the claims.

For example, according to a first variant embodiment not illustrated, the elastic means 27 could be configured to maintain the locking pin 24 in the retracted position when said locking means 10 is in the release configuration.

The locking mechanism 30, on the other hand, could be configured to mechanically push the locking pin 24 into the extracted position when both assume the second configuration, thus overcoming the force of the elastic means 27. For example, the slider 31 could be equipped with a portion inclined with respect to the reference axis C which is configured to cooperate in contact with an inclined portion of the locking pin 24 of a complementary shape in order to mechanically push the latter towards the extracted position.

Alternatively, the locking means 10 could be devoid of the elastic means 27 and the locking mechanism 30 could be mechanically connected to the locking pin 24, for example, by means of a cam and related cam-follower pin, in order to bring the locking pin 24 into the retracted position when it is in the first configuration.

In addition, according to a further variant embodiment of the apparatus 1 not illustrated, the entry opening of the seat may not extend seamlessly between the second insertion direction d₂ and the third insertion direction d₃.

In other words, the seat 9 could be provided with separate and distinct entry openings adapted to respectively allow the insertion of the actuator 5 along the insertion directions d₁, d₂ and d₃.

In addition, according to a further variant of the invention, the identification means 36 may also comprise electromechanically operated mechanisms or may comprise sensors of a magnetic or electromagnetic type.

Finally, the slider 31 of the locking mechanism 30 may be provided as one piece with the ferromagnetic core 35.

## Claims

1. Safety locking apparatus (1) for a safety door (103) of an industrial machine or plant (100) comprising a fixed part (104) and movable part (106);
said safety locking apparatus (1) comprising:
• a safety switch (3) configured to be carried by said fixed part (104); and
• an actuator (5) configured to be carried by said movable part (106) and to cooperate with said safety switch (3);
said safety switch (3) extending along a reference axis (B) and comprising:
• a seat (9) configured to be engaged by said actuator (5); and
• locking means (10) configured to assume, selectively and alternatively, a locking configuration, wherein said locking means (10) locks said actuator (5) within said seat (9), and a release configuration, wherein said locking means (10) allows said actuator (5) to be withdrawn from said seat (9);
• switching means (48) configured to assume an active state and an inactive state; and
• an electronic control unit (46) configured to control said switching means (48) according to the interaction between said actuator (5) and said seat (9);
said safety locking apparatus (1) being **characterized in that** said seat (9) is shaped so as to allow the insertion of said actuator (5) in one or more insertion directions (d₁, d₂, d₃), which lie on a reference plane (P) parallel to said reference axis (B); and **in that** said locking means (10) comprises a locking pin (24) movable in one locking direction (d₄) transversal to said reference plane (P) from and towards an extracted position in which said locking pin (24) is adapted to lock said actuator (5) within said seat (9).

2. Apparatus according to claim 1, wherein said seat (9) is shaped to allow the insertion of said actuator (5) at least in one first insertion direction (d₁) parallel to said reference axis (B).

3. Apparatus according to claim 2, wherein said seat (9) is shaped to allow the insertion of said actuator (5) in one second insertion direction (d₂) transversal to said reference axis (B).

4. Apparatus according to claim 3, wherein said seat (9) is shaped to allow the insertion of said actuator (5) in a plurality of insertion directions defining an angular interval that extends seamlessly between said first insertion direction (d₁) and said second insertion direction (d₂).

5. Apparatus according to claim 4, wherein said seat (9) is shaped to allow the insertion of said actuator (5) in a third insertion direction (d₃) parallel and opposite to said second insertion direction (d₂).

6. Apparatus according to claim 5, wherein said seat (9) is shaped to allow the insertion of said actuator (5) in a plurality of insertion directions defining an angular interval that extends seamlessly between said second insertion direction (d₂) and said third insertion direction (d₃).

7. Apparatus according to any of the preceding claims, wherein said safety switch (3) comprises a housing (20) and a pair of protruding walls (21), which extend cantilevered from said housing (20) parallel to said reference axis (B), are arranged facing each other in a spaced-apart manner on opposite sides of said reference plane (P) and delimit said seat (9) between them.

8. Apparatus according to claim 7, wherein said locking pin (24) is supported in a movable manner by one of said walls (21) and, in said extracted position, protrudes cantilevered from one of said walls (21) into said seat (9).

9. Apparatus according to any of the preceding claims, wherein said locking means (10) comprises a locking mechanism (30) configured to selectively lock said locking pin (24) in said extracted position;
said locking mechanism (30) being configured to assume, selectively and alternatively, a first configuration wherein said locking mechanism (30) translates or allows said locking pin (24) to translate between said extracted position and a retracted position, and a second configuration wherein said locking mechanism (30) cooperates in contact with said locking pin (24) and locks said locking pin (24) in said extracted position.

10. Apparatus according to claim 9, wherein said locking mechanism (30) comprises a slider (31) movable along a sliding axis (C) transversal to said locking direction (d₄) between a first position wherein said slider (31) arranges or makes it possible to arrange said locking pin (24) in said retracted position, and a second position wherein said slider (31) cooperates in contact with said locking pin (24) and locks said locking pin (24) in said extracted position.

11. Apparatus according to any one of the preceding claims, wherein said locking means (10) comprises elastic means (27) configured to exert forces adapted to maintain said locking pin (24) in said extracted position.

12. Apparatus according to any one of the preceding claims, wherein said actuator (5) comprises a transmitter (37) and said safety switch (3) comprises a receiver (38) configured to receive at least one identification signal of said transmitter (37) and to generate a presence signal indicating the presence of said actuator (5) in said seat (9).
